## Europäisches Patentamt
## European Patent Office
## Office européen des brevets

(11) Veröffentlichungsnummer: **0 167 640**
**B1**

(12) **EUROPÄISCHE PATENTSCHRIFT**

(45) Veröffentlichungstag der Patentschrift:
**06.12.89**

(51) Int. Cl.⁴: **A 01 B 37/00,** A 01 B 61/04

(21) Anmeldenummer: **84107629.2**

(22) Anmeldetag: **02.07.84**

(54) **Bodenbearbeitungsgerät für den Anbau an einen Schlepper.**

(43) Veröffentlichungstag der Anmeldung:
**15.01.86 Patentblatt 86/3**

(45) Bekanntmachung des Hinweises auf die Patenterteilung:
**06.12.89 Patentblatt 89/49**

(84) Benannte Vertragsstaaten:
**AT CH DE FR GB IT LI**

(56) Entgegenhaltungen:
**FR-A-1 149 170**
**US-A-1 398 859**
**US-A-1 604 721**
**US-A-3 032 122**

(73) Patentinhaber: **Rabewerk Heinrich Clausing, D-4515 Bad Essen 1 (DE)**

(72) Erfinder: **Warnking, Richard, Dipl.- Ing., Klockenpatt 5, D-4515 Bad Essen 1 (DE)**

(74) Vertreter: **Missling, Arne, Dipl.- Ing., Patentanwälte Dipl.- Ing. R. Schlee Dipl.- Ing. A. Missling Bismarckstrasse 43, D-6300 Giessen (DE)**

EP 0 167 640 B1

### Beschreibung

Die Erfindung bezieht sich auf ein Bodenbearbeitungsgerät gemäß dem Oberbegriff von Anspruch 1. Es eignet sich vor allem für die Saatbettbereitung mit Anbau an einen Schlepper, insbesondere an eine diesem nachlaufende Sämaschine, wobei vom Schlepper aus Bodenbearbeitungswerkzeuge antreibbar sind.

Um den von den Schlepperrädern oft bis in größere Tiefen verdichteten Boden wieder aufzulockern, benutzt man Spurlockerer, welche möglichst noch tiefer reichen als die Arbeitstiefe der Bodenbearbeitungswerkzeuge, z. B. der Zinken oder Messer einer Kreiselegge. Tiefgreifende Spurlockerer sind jedoch besonders stark der Gefahr ausgesetzt, auf große Steine aufzutreffen. Zur Vermeidung von Schäden muß der Spurlockerer deshalb nach oben ausweichen können.

Saatbettbereitungsmaschinen werden häufig mit einer Sämaschine kombiniert, so daß nach der Saatbettbereitung ein erneutes Befahren des Ackers nicht mehr erforderlich ist. Bei einem solchen kombinierten Gerät liegt der Gesamtschwerpunkt verhältnismäßig weit hinter dem Schlepper. Um das Kombinationsgerät noch ausheben zu können, ohne daß ein Kippen des Schleppers um die Hinterradachse zu befürchten ist, muß man den Schwerpunkt möglichst nahe an den Schlepper heranrücken. Da Spurlockerer naturgemäß zwischen Schlepper und Gerät angeordnet sind, ist eine Spurlockererkonstruktion erwünscht, die in Fahrtrichtung nur wenig Platz beansprucht.

Aus der DE-U-1 607 463 ist ein Spurlockerer als Spezialgerät bekannt, d.h. nicht als Bestandteil eines sonstigen Bodenbearbeitungsgerätes. Der Spurlockererstiel ist mittels eines Parallelogrammgetriebes aufgehängt, mit dem die Spurlockererschare von einer Arbeits- in eine Ruhestellung gebracht werden. Die Bewegung der Spurlockererstiele ist dabei im wesentlichen vertikal. Eine solche Vorrichtung beansprucht wegen der sich weit in Fahrtrichtung erstreckenden Parallelogrammglieder viel Platz. Sie ist auch nicht als Sicherheitseinrichtung verwendbar, da sich die Schare fast vertikal nach oben bewegen, also von einem Hindernis nicht relativ zum Gerät nach hinten gedrückt werden können.

In der US-A-3 032 122 ist ein Bodenbearbeitungsgerät mit Werkzeugen beschrieben, die beim Auftreffen auf Hindernisse nach oben ausschwenken. Jedes Werkzeug weist ein Schar und einen dieses tragenden Stiel auf, der in einer Gleit- und Rollenführung steil nach oben ragend so geführt ist, daß bei horizontaler Kraft auf das Schar dieses nach hinten oben ausweicht. Der Stiel ist in Fahrtrichtung gesehen konkav gekrümmt, wobei die Krümmung zum unteren Stielende hin abnimmt. Beim Anheben des Schars findet jedoch keine Verlagerung des ideellen Schwenkpunktes des Stieles nach unten statt; die unterschiedlichen Krümmungsradien des Stieles bewirken nur, daß der Bewegungspol in einer zum Boden parallelen Linie bzw. Ebene näher heran oder weiter weg rückt. Dazu ist eine Nockensteuerung vorgesehen, die mit einem Druckzylinder-Gestänge zusammenwirkt, um das ausgehobene Schar in die Pflügstellung zurückzubewegen. Die hydraulisch betätigte Nocken-Gestängeführung bedeutet einen relativ großen konstruktiven Aufwand und benötigt relativ viel Platz zum Einbau.

Der Erfindung liegt die Aufgabe zugrunde, ein Bodenbearbeitungsgerät der Eingangs genannten Art so auszubilden, daß das Spurlockererschar bei geringem Platzbedarf des Spurlockerers in Fahrtrichtung eine für das Ausweichen günstige Bewegungscharakteristik hat.

Hauptmerkmale der Erfindung sind im kennzeichnenden Teil von Anspruch 1 angegeben. Ausgestaltungen sind Gegenstand der Ansprüche 2 bis 12.

Erfindungsgemäß wird ein Spurlockerer nach Art der DE-U-1 607 463 auf überraschend einfache und wirksame Weise mit einer besonders vorteilhafter Bewegungscharakteristik ausgestattet, indem der abweichend von einem Kreisbogen gekrümmt Stiel jedes Spurlockerers steil nach oben ragend in einer Gleit- und/oder Rollenführung derart gehalten und geführt ist, daß bei horizontaler Kraft auf das Spurlockererschar dieses relativ zum Gerät eine - bezüglich der Fahrtrichtung gesehen - nach hinten oben gerichtete Bewegung ausführt, wobei die konkave Seite des Stiels in Fahrtrichtung weist und seine Krümmung ausgehend von einem mittleren Bereich nach den Stielenden hin abnimmt, so daß bei Beginn der Aufwärtsbewegung der ideelle Schwenkpunkt des Stieles relativ hoch liegt und im Verlaufe der Schwenkung nach unten wandert.

Die Vermeidung eines Lenkergetriebes führt zu einem besonders geringem Platzbedarf für den Spurlockerer. Dessen Stiel-Führung ähnelt an sich derjenigen gemäß US-A-3 032 122, doch haben die Schare erfindungsgemäß eine Bewegungscharakteristik derart, daß zunächst eine große horizontale Bewegungskomponente vorliegt, die anschließend abnimmt, während zugleich die vertikale Bewegungskomponente ansteigt. Trifft also das Werkzeug des Vorlockerers auf ein Hindernis, so kann es dem Stoß nach hinten genügend nachgeben; die dann steiler aufwärts gehende Bewegung ermöglicht es, diesen horizontalen Bewegungsanteil sehr kurz zu halten, das Werkzeug also im zweiten Bewegungsabschnitt steiler auszuheben und daher rascher wieder absenken zu können. Mit dieser neuartigen und einfachen Konstruktion wird der Aushub des Werkzeugs zeitlich verkürzt und auf diese Weise eine rationelle, gleichmäßige Bodenbearbeitung gewährleistet. Außerdem kommt man mit wenig Einbauraum aus, so daß nur wenig Freiraum zwischen dem Spurlockererschar und den Bodenbearbeitungswerkzeugen vorhanden zu sein braucht.

Die genannte Bewegungscharakteristik läßt sich in überaus vorteilhafter Weise mit einer Stielform nach Anspruch 2 erreichen, die besonders einfach ist.

Im allgemeinen genügen zwei Führungselemente gemäß Anspruch 3, die vorzugsweise als Rollen ausgeführt sind. In Betracht kommen auch Teile, an denen sich Gleitflächen befinden, mit denen der Stiel zusammenwirkt. Rollen haben jedoch den Vorteil einer geringen Reibung, wodurch eine sichere Funktion gewährleistet ist. Den Führungselementen können ferner nach Anspruch 4 Gegenelemente zugeordnet sein. Wenn die eigentlichen Führungselemente Rollen sind, können die Gegenelemente Gleitflächen aufweisen. Im allgemeinen entstehen keine größeren Reibungskräfte an den Gegenelementen, da sie nur dazu dienen, ein Abheben von den eigentlichen Führungselementen zu verhindern.

Konstruktiv vorteilhaft für die Lagerung und Führung des Stieles sind parallele Platten gemäß Anspruch 5. Diese Platten bewirken eine seitliche Führung. Seitliche Kräfte sind gering, so daß hierfür eine Gleitführung an den Platten ohne Nachteil ist.

Eine Gesamtanordnung gemäß Anspruch 6 ergibt einen minimalen Platzbedarf.

Vorteilhafterweise sind laut Anspruch 7 Rückstellfedern vorgesehen, mit denen sich die Haltekraft in der Arbeitsstellung optimal einstellen läßt. Eine symmetrische Federanordnung gemäß Anspruch 8 hat den Vorteil, daß ein einseitiger Zug vermieden und dadurch einem Verklemmen des Stieles in seiner Führung vorgebeugt wird. Besonders zweckmäßig sind nach Anspruch 9 Zugfedern. Eine Kombination solcher Zugfedern mit einem Anschlag für die Arbeitsstellung gemäß Anspruch 10 ergibt einen geringen Bauaufwand.

Eine Höhenverstellung nach Anspruch 11 gestattet eine bequeme Anpassung des Spurlockerers an verschiedene Arbeitstiefen und sein Nachstellen bei Abnutzung der Spurlockererschare. Die Anordnung der Verstellvorrichtung im unteren Bereich des Stieles ist konstruktiv einfach, da an der Stielführung Verstellmöglichkeiten nicht vorgesehen werden müssen.

Wenn das Bodenbearbeitungsgerät eine Kreiselegge ist, erweist sich eine Befestigung gemäß Anspruch 12 als besonders zweckmäßig, zumal dadurch der Platzbedarf in Fahrtrichtung weiter vermindert wird.

In der Zeichnung ist ein Ausführungsbeispiel der Erfindung dargestellt. Es zeigen:

Fig. 1    eine Draufsicht auf eine Kreiselegge, die mit insgesamt vier Spurlockerern ausgerüstet ist,

Fig. 2    eine Seitenansicht entsprechend dem Pfeil II Fig. 1,

Fig. 3    eine Vorderansicht eines Spurlockerers in Richtung des Pfeiles III in Fig. 2 und

Fig. 4    eine Draufsicht auf einen Spurlockerer in Richtung des Pfeiles IV in Fig. 2.

Eine Kreiselegge K ist an einen strichpunktiert angedeuteten Schlepper S angebaut. Zum Anbau dient ein Schlepperdreipunktgestänge, von dem in Figur I die unteren Enden von Lenkern 1,2 angedeutet sind. An der Kreiselegge befinden sich im Bereich hinter den hinteren Schlepperrädern 3, 4 Spurlockerer L. Hinter jedem Schlepperrad 3, 4 sind zwei Spurlockerer angeordnet.

Die Kreiselegge hat einen Getriebekasten 5, in dem mehrere Kreisel 6 drehbar gelagert sind. An jedem Kreisel 6 befinden sich zwei nach unten ragende Bodenbearbeitungswerkzeuge 7. Der Getriebekasten 5 hat an seinen quer zur Fahrtrichtung F verlaufenden Längsrändern Flansche 8, 9, auf denen ein Getriebekastendeckel 10 aufliegt, der mittels Befestigungsschrauben 11, die auch die Flansche 8, 9 durchgreifen, mit dem Getriebekasten verschraubt ist.

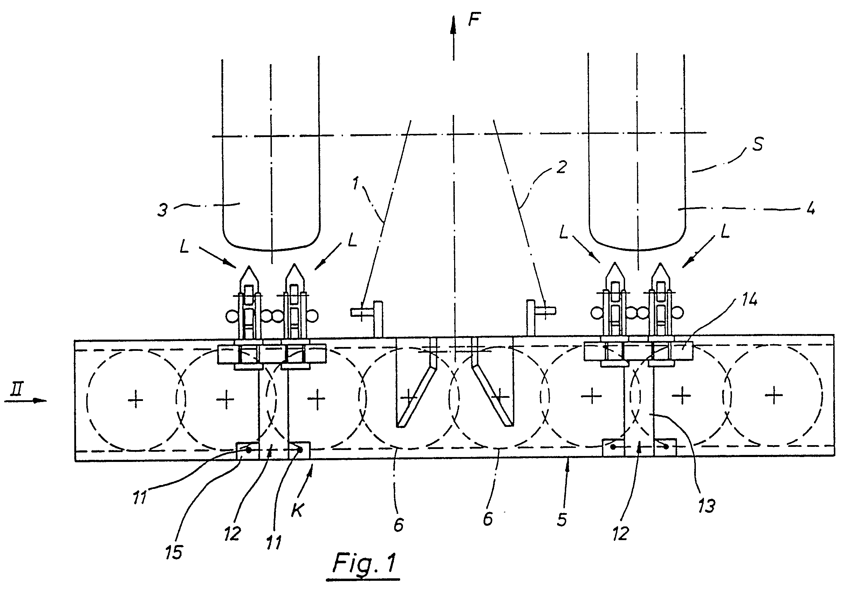

Auf dem Getriebekasten sind insgesamt mit 12 bezeichnete Halterungen 12 für die Spurlockerer L befestigt. Jede Halterung 12 hat einen Befestigungsbalken 13 und einen damit verschweißten, rechtwinklig zum Befestigungsbalken 13 verlaufenden Haltebalken 14. Am Befestigungsbalken befinden sich Befestigungsplatten 15, 16, die von Deckel-Befestigungsschrauben 11 durchgriffen sind. Der Haltebalken 14 ragt, wie der Grundriß nach Fig. 1 zeigt, beidseitig vom Befestigungsbalken 13 ab und liegt oberhalb des vorderen Längsflansches 9 des Getriebekastens 5. Jeder Spurlockerer L ist mittels einer Klemmeinrichtung 17 an einem Haltebalken 14 festgeklemmt. Jede Klemmeinrichtung 17 hat zwei Klemmplatten 18, 19, die mittels Schrauben 20 zusammenziehbar sind. Die Klemmeinrichtung 17 ermöglicht es, den zugeordneten Spurlockerer an beliebigen Stellen des Haltebalkens 14 zu befestigen.

Jeder Spurlockerer L hat ein Spurlockererschar 21 und einen Stiel 22, an dem das Spurlockererschar befestigt ist. Der Spurlockererstiel 22 ist in einer insgesamt mit 23 bezeichneten Führung verschiebbar.

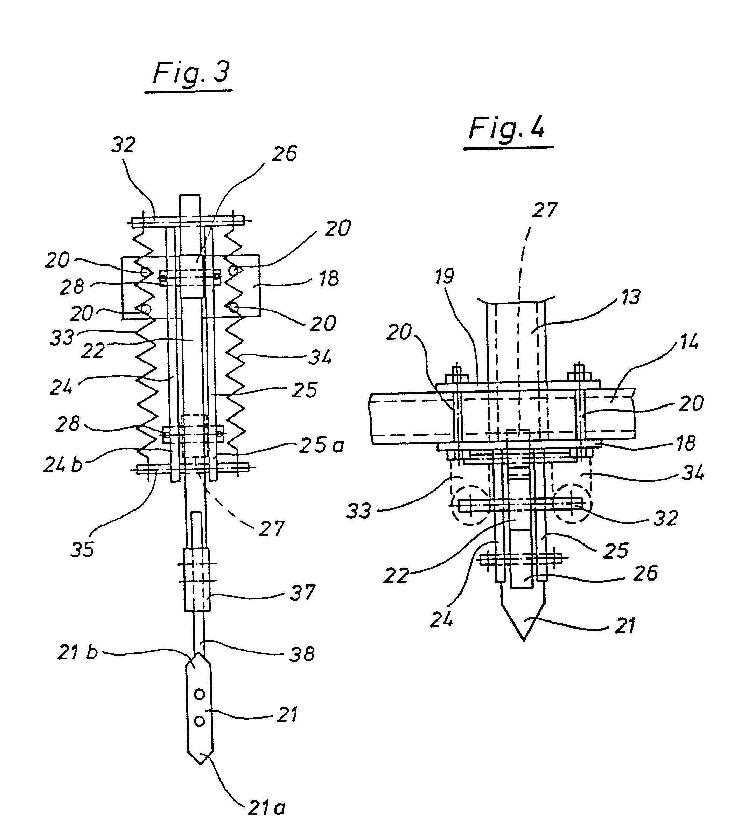

Die Führung 23 hat zwei parallele Platten 24 und 25, zwischen die der Spurlockererstiel 22 mit geringem seitlichen Spiel eingreift.Der Spurlockererstiel 22 hat einen rechteckigen Querschnitt. Die beiden Platten 24 und 25 sind mit der Platte 18 der Klemmeinrichtung 17 verschweißt. Aus der Ansicht nach Fig. 3 ist auch zu erkennen, daß insgesamt vier Klemmschrauben 20 vorgesehen sind.

Zwischen den Platten 24, 25 sind eine obere Rolle 26 und eine untere Rolle 27 drehbar gelagert, nämlich jeweils auf einem Lagerbolzen 28, der in den Platten 24, 25 abgestützt ist. Die obere Rolle 26 wirkt mit der Vorderfläche 29 und die untere Rolle 27 mit der rückseitigen Fläche 30 des Stiels 22 zusammen. Der oberen Rolle 26 ist ein Führungsbolzen 31 zugeordnet, an dem die Rückseite 30 des Stiels zur Anlage kommen kann.

Der Stiel 22 ist in seinem mittleren Bereich 22a längs einem Kreisbogen gekrümmt. An den Krümmungsbereich schließt ein oberer gerader Abschnitt 22b und ein unterer gerader Abschnitt 22c an. Anstelle der geraden Abschnitte 22b, 22c könnten sich auch gekrümmte Abschnitte anschließen, deren Krümmungsradius größer ist als im mittleren Bereich 22a. Wesentlich ist, daß die Vorderfläche 29 insgesamt konkav ist. Die geraden Abschnitte 22b, 22c können auch als Abschnitte mit unendlich großem Krümmungsradius aufgefaßt werden.

Am oberen Ende des Stiels 22 befindet sich ein Querstift 32, der seitlich über die Platten 24, 25 hinausragt (siehe dazu insbesondere Fig. 3). An den Enden des Querstiftes 32 sind Zugfedern 33, 34 eingehängt. Die Zugfedern verlaufen seitlich der Platten 24, 25 und sind mit ihren unteren Enden an einem Querstift 35 eingehängt, der an den Platten 24, 25 befestigt ist. Die Federn 33, 34 versuchen den Stiel 22 in der mit ausgezogenen Linien gezeichneten Stellung zu halten. Die tiefste Stellung wird dadurch bestimmt, daß der Querstift 32 an den Oberkanten 36 der Platten 24, 25 zur Anlage kommt.

Die Platten 24, 25 sind mit ihren unteren Bereichen 24a, 25a nach hinten gerichtet, so daß sie den Flansch 9 des Getriebekastens 5 untergreifen. Dadurch erreicht man, daß die untere Rolle 27 möglichst weit hinten liegt.

Am unteren Ende des Stieles 22 befindet sich eine Hülse 37, durch die ein unterer Stielteil 38 hindurchgeschoben ist. Der Stielteil 38 hat eine vertikale Reihe aus Löchern 39, die mit Löchern 40, 41 in der Hülse 37 wahlweise zur Dekkung gebracht werden können. Eine solche Lage wird durch Hindurchführen eines Arretierungsstiftes fixiert, so daß verschiedene Höheneinstellungen des Spurlockererschares 21 möglich sind. Das Spurlockererschar 21 hat zwei Spitzen 21a und 21b. Nach Abnutzung einer Spitze wird das Schar umgedreht und kann dann noch bis zur Abnutzung der anderen Spitze arbeiten.

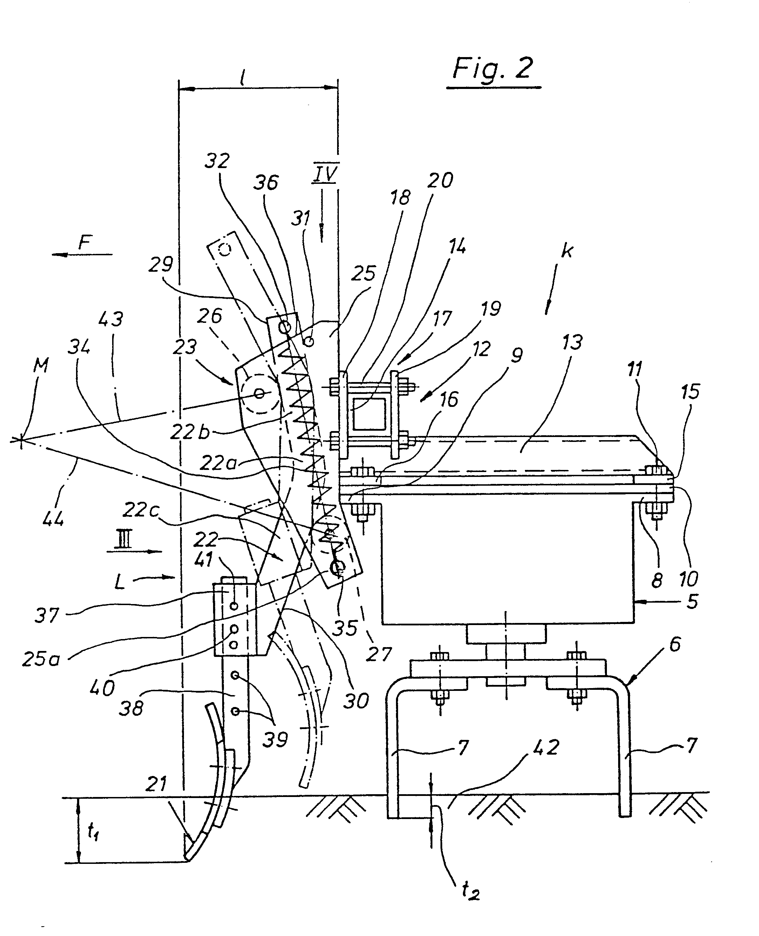

Der Spurlockerer arbeitet wie folgt. Die Arbeitsstellung eines Spurlockerer ist mit ausgezogenen Linien eingezeichnet, insbesondere auch in Fig. 2. In der Arbeitsstellung greifen die Spurlockererschare 21 bis zur Tiefe $t_1$ in den Boden 42 ein. Die Tiefe $t_1$ ist wesentlich größer als die Tiefe $t_2$, bis zu der die rasch umlaufenden Bodenbearbeitungswerkzeuge 7 in den Boden eingreifen. Die Spurlockerer lockern also die Erde in einer Tiefe, die von den Werkzeugen 7 nicht erreicht wird. Wie Fig. 1 zeigt, sind hinter jedem Schlepperrad 3 und 4 zwei Spurlockerer angeordnet.

Insbesondere auch wegen der relativ großen Arbeitstiefe $t_1$ kann es leicht vorkommen, daß ein Spurlockerer auf ein Hindernis, im allgemeinen einen größeren Stein, auftrifft. Das Spurlockererschar wird dann relativ zu der Kreiselegge K nach hinten ausgeschwenkt. Der momentane Schwenkmittelpunkt M ist definiert durch den Schnittpunkt der Normalen 43, 44, die in den Berührungspunkten der Führungsrollen 26, 27 auf den Rollflächen 29, 30 des Stiels 22 stehen. Aus Fig. 2 ist zu ersehen, daß der Schwenkmittelpunkt M eine besonders günstige Lage hat, d.h. er liegt verhältnismäßig hoch, so daß die Bewegungsbahn der Scharspitze 21 eine große nach hinten gerichtete Komponente hat. Gleichzeitig bewegt sich das Spurlockererschar nach oben. Wenn der gekrümmte Bereich 22a in die Nähe der Rolle 26 gelangt, befindet sich der Schwenkmittelpunkt wesentlich tiefer, so daß die nach oben gerichtete Komponente des Spurlockererschares 21 im Verhältnis zur horizontalen Komponente größer wird. Das Spurlockererschar bewegt sich also rasch nach oben. Die obere Endstellung ist mit strichpunktierten Linien eingezeichnet.

Während der Aufwärtsbewegung des Spurlockererschares werden die Federn 33, 34, die auch in der Arbeitsstellung eine gewisse Vorspannung haben, weiter gespannt. Nach Passieren des Hindernisses ziehen die Federn 33, 34 den Spurlockerer wieder in die Arbeitsstellung zurück. Die strichpunktierte Stellung wird natürlich nur dann erreicht, wenn das Hindernis entsprechend groß ist. Ist das Hindernis klein und liegt unterhalb der Bodenfläche 42, so gelangt das Spurlockererschar schon nach einer kleinen Ausschwenkung wieder in seine Arbeitsstellung zurück.

Bei den gegebenen Hebelarmen und Kräften liegt der Stiel 22 stets an den Rollen 26, 27 an, so daß der Führungsbolzen 31 nur als zusätzliche Sicherung dagegen zu betrachten ist, daß sich der Stiel 22 unkontrolliert bewegt.

Fig. 2 zeigt, daß die Einbaulänge 1 des Spurlockerers verhältnismäßig klein ist und daß auch beim Ausweichen des Spurlockerers die Länge 1 des Einbauraumes nicht verlassen wird. Dies wird durch die besondere Art der Lagerung und Führung des Spurlockererstiels erreicht. Die Kreiselegge K kann deshalb nahe beim Schlepper angebaut werden. Auf die Kreiselegge kann deshalb auch eine Sämaschine aufgesetzt werden, ohne daß das Ausheben des Kombinationsgerätes mit einer Kippgefahr für den Schlepper verbunden ist.

## Patentansprüche

1. Bodenbearbeitungsgerät (K) vor allem für die Saatbettbereitung, zum Anbau an einen Schlepper, insbesondere an eine diesem nachlaufende Sämaschine, mit vom Schlepper aus antreibbaren Bodenbearbeitungswerkzeugen (7) an um vertikale Achsen drehbaren Kreisein (6), mit zwischen Schlepper (S) und Gerät (K) angeordneten Spurlockerern (L), die beim Auftreffen auf Hindernisse nach oben ausschwenken und jeweils mindestens ein Spurlockererschar (21) sowie einen dieses tragenden Stiel (22) aufweisen, der relativ zu einer Stielhalterung bewegbar ist, dadurch gekennzeichnet, daß der abweichend von einem Kreisbogen gekrümmte Stiel (22) jedes Spurlockerers (L) steil nach oben ragend in einer Gleit- und/oder Rollenführung (23) derart gehalten und geführt ist, daß bei horizontaler Kraft auf das Spurlockererschar (21) dieses relativ zum Gerät (K) eine - bezüglich der Fahrtrichtung (F) gesehen - nach hinten oben gerichtete Bewegung ausführt, wobei die konkave Seite (29) des Stiels (22) in Fahrtrichtung weist und seine Krümmung ausgehend von einem mittleren Bereich (22a) nach den Stielenden hin abnimmt, so daß bei Beginn der Aufwärtsbewegung der ideelle Schwenkpunkt (M) des Stieles (22) relativ hoch liegt, und im Verlaufe der Schwenkung nach unten wandert.

2. Gerät nach Anspruch 1, dadurch gekennzeichnet, daß im mittleren Bereich (22a) ein Knick oder ein Radius angeordnet ist, der vorzugsweise gleich oder etwas größer ist als der Radius einer Führungsrolle (26), und daß an den mittleren Bereich (22a) gerade Stielteile (22b, 22c) anschließen.

3. Gerät nach Anspruch 1 oder 2, dadurch gekennzeichnet, daß ein oberes Führungselement (26) an der Vorderseite (29) des Stieles (22) und an seiner Rückseite (30) ein unteres Führungselement (27) anliegt.

4. Gerät nach Anspruch 3, dadurch gekennzeichnet, daß mindestens einem Führungselement, vorzugsweise dem oberen (26), ein Gegenelement (31) zugeordnet ist, das an der dem Führungselement (26) gegenüberliegenden Seite (30) des Stieles (22) anliegt.

5. Gerät nach einem der Ansprüche 1 bis 4, dadurch gekennzeichnet, daß der Stiel (22) zwischen zwei Platten (24, 25) eingreift, die den Stiel (22) seitlich führen und an denen auch die Führungselemente (26, 27) gelagert sind.

6. Gerät nach einem der Ansprüche 1 bis 5, dadurch gekennzeichnet, daß eine gedachte Sehne, welche die Stielenden miteinander verbindet, in der Arbeitsstellung des Spurlokkererschares (21) zumindest genähert vertikal steht.

7. Gerät nach einem der Ansprüche 1 bis 6, gekennzeichnet durch mindestens eine Feder (33, 34), die einerseits am Stiel (22), andererseits an der Stielhalterung (23) abgestützt ist und die den Stiel (22) gegen einen Anschlag (36) in die Arbeitsstellung zieht.

8. Gerät nach Anspruch 7, dadurch gekennzeichnet, daß zu beiden Seiten des Stieles (22) je eine Feder (33, 34) angeordnet ist.

9. Gerät nach Anspruch 7 oder 8, dadurch gekennzeichnet, daß die Feder (33, 34) Zugfedern sind.

10. Gerät wenigstens nach Anspruch 6 und 9, dadurch gekennzeichnet, daß am oberen Ende des Stieles (22) ein Querteil (32) angeordnet ist, z. B. ein Stift, an dem die Federn (33, 34) angehängt sind, und daß das Querteil (32) zugleich einen Anschlag bildet, der in der Arbeitsstellung des Spurlockerers (L) an oberen Stirnflächen (36) der Platten (24, 25) anliegt.

11. Gerät nach einem der Ansprüche 1 bis 10, dadurch gekennzeichnet, daß der Stiel (22) an seinem unteren Ende eine Hülse (37) aufweist, in der ein mit dem Spurlockererschar (21) verbundener Stiel-Endteil (38) höhenverschiebbar und in verschiedenen Höhenlagen feststellbar ist, vorzugsweise mittels eines Arretierungsbolzens, der Löcher (40, 41 bzw. 39) in der Hülse (37) und im Stiel-Endteil (38) durchgreift.

12. Gerät nach wenigstens einem der Ansprüche 1 bis 11, in Form einer Kreiselegge (K) mit einem quer zur Fahrtrichtung verlaufenden Kasten (5), der an seinen Längsrändern Flansche (8, 9) aufweist, dadurch gekennzeichnet, daß oberhalb des vorderen Flansches (9) ein Querbalken (14) angeordnet ist, an dem Stielhalterungen bzw. -führungen (23) mittels einer Klemmeinrichtung (17) befestigbar sind.

**Claims**

1. A soil-tilling implement (K), more particularly for preparing seed beds, for attachment to a tractor, particularly to a sowing machine towed thereby, comprising soil-tilling tools (7) which can be driven from the tractor and are arranged on rotary devices (6) which are rotatable about vertical axles, and comprising track looseners (L) which are arranged between the tractor (S) and the implement (K), which track laoseners swing upwards if they encounter obstacles and each of which comprises at least one track loosening coulter (21) and a shaft (22) carrying the said coulter, which shaft is movable relative to a shaft support, characterised in that the shaft (22) of each track loosener (L), which shaft is curved so as to deviate from a circular arc, is held and guided projecting steeply upwards in a slide and/or roller guide (23) in such a manner that when a horizontal force is exerted on the track loosening coulter (21), the latter effects a backward and upward movement relative to the implement (K) and relative to the direction of travel (F), the concave side (29) of the shaft (22) pointing in the direction of travel and its curvature decreasing from a central region (22a) towards the shaft ends, so that at the start of the upward movement the ideal point of rotation (M) of the shaft (22) lies relatively high up and travels downwards during the pivoting movement.

2. An implement according to claim 1, characterised in that in the central region (22a) a bend or radius is arranged, which is preferably equal to or somewhat larger than the radius of a guide roller (26), and in that straight shaft portions (22b, 22c) adjoin the central region (22a).

3. An implement according to claim 1 or 2, characterised in that an upper guide element (26) rests against the front face (29) of the shaft (22) and a lower guide element (27) rests against its rear face (30).

4. An implement according to claim 3. characterised in that a counter element (31) is associated with at least one guide element, preferably the upper guide element (26), which counter element rests against the side (30) of the shaft (22) opposite the guide element (26).

5. An implement according to one of claims 1 to 4, characterised in that the shaft (22) engages between two plates (24, 25), which guide the shaft (22) laterally and on which the guide elements (26, 27) are also mounted.

6. An implement according to one of claims 1 to 5, characterised in that an imaginary chord, which connects the shaft ends with one another, lies at least approximately vertical in the operative position of tie track loosening coulter (21).

7. An implement according to one of claims 1 to 6, chaacterised by at least one spring (33, 34) which is supported on the one hand on the shaft (22) and on the other hand on the shaft support (23) and pulls the shaft (22) against an abutment (36) into the operative position.

8. An implement according to claim 7, characterised in that a spring (33, 34) is arranged on each side of the shaft (22).

9. An implement according to claim 7 or 8, characterised in that the springs (33, 34) are tension springs.

10. An implement at least according to claim 6 and 9, characterised in that at the upper end of the shaft (22) a transverse member (32) is arranged, e.g. a pin. to which the springs (33, 34) are secured, and in that the transverse member (32) also forms an abutment, which in the operative position of the track loosener (L) rests against the upper end faces (36) of the plates (24, 25).

11. An implement according to one of claims 1 to 10, characterised in that at its lower end the shaft (22) comprises a sleeve (37), in which a shaft end part (38) connected with the track loosening coulter (21) is height-adjustable and can be locked in different vertical positions, preferably by means of a locking bolt, which penetrates holes (40, 41 or 39) in the sleeve (37) and in the shaft end part (38).

12. An implement according to at least one of claims 1 to 11, in the form of a rotary harrow (K) with a bin (5) extending transversely to the direction of travel, which bin comprises flanges (8, 9) on its longitudinal edges, characterised in that a cross beam (14) is arranged above the front flange (9), to which cross beam shaft supports or guides (23) can be secured by means of a clamping device (17).

## Revendications

1. Appareil (K) de travail du sol, servant surtout à préparer le sol pour un semis de semences et destiné à être accroché à un tracteur, en particulier avec un semoir, suivant l'appareil, lequel comporte des outils (7) de travail du sol susceptibles d'être entraînés, disposés sur des rotots (6) capables de tourner, et lequel comporte des effaceurs de sillon (L) disposés entre le tracteur (S) et l'appareil (K), qui dévient vers le haut quand ils rencontrent des obstacles et qui comportent chacun au moins un soc (21) effaceur de sillon ainsi qu'une jambe (22) qui le porte, cette dernière étant déplaçable par rapport à un support de jambe, caractérisé en ce que la jambe (22), qui a une forme courbe qui s'écarte d'un arc de cercle, est maintenue et guidée raide vers le haut dans un guide (23) à glissière et/ou à rouleaux de façon qu'au cas où une force horizontale serait exercée sur le soc (21) de l'effaceur de sillon, ce soc exécuterait par rapport à l'appareil (K) un mouvement vers l'arrière et vers le haut, relativement à la direction (F) de l'avancement, le côté concave (29) de la jambe (2) étant dirigé dans cette direction (F) et sa courbure décroissant, de la région moyenne (22a) jusqu'aux extrémités de la jambe, de sorte qu'au début du mouvement de montée le centre de pivotement imaginaire (M) de la jambe (22) est situé relativement haut et se déplace vers le bas au cours du pivotement.

2. Appareil selon la revendication 1, caractérisé en ce que dans la région moyenne (22a), il est disposé un coude dont le rayon de courbure est de préférence égal au rayon d'un rouleau ou galet de guidage (26) ou un peu plus grand que celui-ci et en ce que des parties rectilignes (22b, 22c) de la jambe se raccordent à la région moyenne (22a).

3. Appareil selon la revendication 1 ou 2, caractérisé en ce qu'un élément (26) de guidage supérieur s'applique contre le côté avant (29) de la jambe (22), et un élément (27) de guidage inférieur, contre son côté arrière (30).

4. Appareil selon la revendication 3, caractérisé en ce qu'il correspond, à au moins un élément de gui dage et de préférence à l'élement de guidage supérieur (26), un élément opposé (31) qui s'applique contre le côté (30) de la jambe (22) en regard de cet élément de guidage (26),

5. Appareil selon l'une des revendications 1 à 4, caractérisé en ce que la jambe (22) s'insère entre deux plaques (24, 25) qui guident latéralement la jambe (22) et sur lesquelles sont également montés les éléments de guidage (26, 27).

6. Appareil selon l'une des revendications 1 à 5, caractérisé en ce qu'une corde imaginaire, reliant entre elles les extrémités de la jambe, est verticale, au moins approximativement, dans la position de travail du soc effaceur de sillon (21).

7. Appareil selon l'une des revendications 1 à 6, caractérisé en ce qu'il comprend au moins un ressort (33, 34) s'appuyant d'un côté sur la jambe (22) et d'autre part sur le support (23) de jambe et en ce que ledit ressort tire la jambe (22) contre une butée (36) dans la position de travail.

8. Appareil selon la revendication 7, caractérisé en ce que des ressorts (33, 34) sont disposés des deux côtés de la jambe (22).

9. Appareil selon la revendication 7 ou 8, caractérisé en ce que les ressorts (33, 34) sont des ressorts de traction.

10. Appareil selon au moins les revendications 6 et 9, caractérisé en ce que l'extrémité supérieure de la jambe (22) porte une partie transversale (32), par exemple une tige à laquelle les ressorts (33, 34) sont accrochés, et en ce que la partie transversale (32) constitue en même temps une butée qui s'applique contre les surfaces frontales (36) des plaques (24, 25) dans la position de travail de l'effaceur de sillon (L).

11. Appareil selon l'une des revendications 1 à 10, caractérisé en ce que la jambe (22) comporte, à son extrémité inférieure, un effaceur de sillon (37), dans lequel une partie d'extrémité (38) de jambe, reliée au foc effaceur de sillon (21), peut se déplacer en hauteur et être fixée dans des positions différentes en hauteur, de préférence au moyen d'une broche d'arrêt qui passe par des trous (40, 41 ou 39), dans le fourreau (37) et dans la partie d'extrémité (38) de jambe.

12. Appareil selon au moins l'une des revendications 1 à 11, sous la forme d'une herse rotative (K) comprenant un caisson (5), dirigé transversalement à la direction d'avancement, lequel comporte des brides (8, 9) sur ses bords longitudinaux, caractérisé en ce qu'au-dessus de la bride avant (9), il est disposé une barre transversale (14), sur laquelle des supports et guides (23) de jambes peuvent être fixés au moyen d'un dispositif de serrage (17).

*Fig. 1*

Fig. 2

_Fig. 3_

_Fig. 4_